# EUROPÄISCHE PATENTSCHRIFT

(11) **EP 2 165 067 B1**
(45) Veröffentlichungstag und Bekanntmachung des Hinweises auf die Patenterteilung: **08.08.2012**
(21) Anmeldenummer: 08749193.2
(22) Anmeldetag: 28.04.2008
(51) Int. Cl.: F02M 35/02, F02M 35/024, B01D 46/00, B01D 46/10, B01D 46/52

(54) **FILTERANORDNUNG FÜR EIN LUFTANSAUGSYSTEM**
FILTER ARRANGEMENT FOR AN AIR INTAKE SYSTEM
DISPOSITIF DE FILTRAGE POUR UN SYSTÈME D'ASPIRATION D'AIR

(30) Priorität: 09.07.2007 DE 102007032006
(43) Veröffentlichungstag der Anmeldung: 24.03.2010
(73) Patentinhaber: Carl Freudenberg KG, 69469 Weinheim (DE)
(72) Erfinder: FELBER, Uwe, 69518 Absteinach (DE); STAHL, Ulrich, 69514 Laudenbach (DE)
(86) Internationale Anmeldenummer: PCT/EP2008/003424
(87) Internationale Veröffentlichungsnummer: WO 2009/006957

(56) Entgegenhaltungen:
- EP-A- 0 900 585
- EP-A- 1 391 233
- EP-A- 1 640 055
- DE-A1- 4 430 333
- DE-A1- 4 443 676
- DE-A1- 19 856 520
- DE-A1-102004 037 468
- DE-U1-202005 019 611
- US-A- 5 509 950
- US-A- 5 888 442

## Beschreibung

### Technisches Gebiet

Die Erfindung betrifft eine Filteranordnung gemäß dem Oberbegriff des Patentanspruchs 1.

### Stand der Technik

Aus der DE 20 2005 019 611 U1 ist eine Filteranordnung mit einem Gehäuse bekannt, in welches ein Filterelement mit einem abgeschrägten Längsrand eingesetzt ist. Aus der DE 44 30 333 A1 ist ein Gehäuse bekannt, in welchem ein Filterelement durch Schnapplaschen gesichert ist. Aus der US 5 509 950 ist ein Gehäuse bekannt, welches an seinem Boden Durchgänge aufweist. Die EP 0 900 585 A1 offenbart einen Halterahmen mit einer Aufnahmenut, in die ein Überstand eines Filterelements einsteckbar ist. Aus der DE 198 56 520 A1 ist ein Gehäuse mit einem Deckel bekannt, bei welchem ein flanschartiger Rand eines Filterelements zwischen Gehäuse und Deckel durch Quetschstege verpresst wird. Die US 5 888 442 zeigt ein Gehäuse, bei welchem flanschartige, kugelförmig verdickte Ränder eines Filterelements in Nuten verpresst werden. Schließlich offenbart die EP 1 391 233 A1 ein Gehäuse, welches beidseitig überragende Ränder eines Filterelements derart umbiegt, dass diese am Gehäuse anliegen.

Filteranordnungen der genannten Art finden Verwendung zur Filterung von Luft. Hierzu wird die Luft über einen Einlass in den Aufnahmeraum eingesaugt und über einen Auslass gefiltert abgeführt. Im Aufnahmeraum ist ein Filterelement zur Filterung der eintretenden Luft angeordnet.

Das Filterelement ist mit einem Dichtelement versehen. Der Aufnahmeraum wird durch das Dichtelement zur Umgebung abgedichtet. Das Dichtelement ist häufig als Schaum, insbesondere als Polyurethanschaum ausgestaltet.

Der Aufnahmeraum wird meist aus zwei Teilen gebildet, nämlich aus dem Gehäuse und einem das Gehäuse abdichtenden Deckel. Zur Abdichtung des Gehäuses sind in der Regel Dichtungsmaßnahmen wie das Anbringen von Schäumen am Filterelement erforderlich, die kostenintensiv und zeitaufwändig sind.

### Darstellung der Erfindung

Der Erfindung liegt daher die Aufgabe zugrunde, eine Filteranordnung der eingangs genannten Art zu schaffen, welche bei konstruktiv einfachem Aufbau eine hohe Filtereffizienz gewährleistet.

Erfindungsgemäß wird die voranstehende Aufgabe durch eine Filteranordnung mit den Merkmalen des Patentanspruchs 1 gelöst.

Erfindungsgemäß ist erkannt worden, dass diese Ausgestaltung ein Einklemmen des Filterelements und damit dessen luftdichte Festlegung ermöglicht. Des Weiteren ist erkannt worden, dass die Verjüngung ermöglicht, kritische Bereiche innerhalb des Aufnahmeraums geometrisch derart auszugestalten, dass die Ausbildung von Spalten oder Ritzen zwischen den Randbereichen des Filterelements und der Innenwandung des Gehäuses vermieden wird. Dabei liegt das Filterelement mit seinen Randbereichen zumindest bereichsweise an der Innenwandung eines vorzugsweise rechteckig bzw. quaderförmig ausgeführten Gehäuses an. Somit ist eine Filteranordnung angegeben, die bei konstruktiv einfachem Aufbau eine hohe Filtereffizienz zeigt.

Das Gehäuse ist durch einen Deckel verschließbar. Die Vorkehrung eines Deckels erlaubt das Öffnen des Aufnahmeraums und das Austauschen eines verbrauchten Filterelements.

Der Deckel weist zumindest eine Nut zur Aufnahme eines Überstands des Randbereichs des Filterelements auf. Durch diese konkrete Ausgestaltung wird das Filterelement einerseits fixiert und andererseits wird eine Dichtwirkung zwischen Deckel und Gehäuse erzielt. Auf weitere Dichtungsmaßnahmen wie O-Ringe oder andere separate Teile kann verzichtet werden.

Der Aufnahmeraum weist Eckbereiche auf und verjüngt sich in Richtung der Eckbereiche derart, dass der Abstand zwischen zwei sich gegenüberliegenden Flächen der Innenwandung abnimmt. Durch diese konkrete Ausgestaltung wird ein rechteckförmiges Filterelement in den kritischen Eckbereichen derart eingeklemmt, dass in den Eckbereichen keine Spalten oder Ritzen entstehen können. Vor diesem Hintergrund könnte der Aufnahmeraum im Querschnitt im Wesentlichen rechteckförmig ausgebildet sein und sich in Richtung seiner Eckbereiche verjüngen.

Die Nut verjüngt sich derart, dass der Überstand beim Zusammenfügen des Gehäuses und des Deckels komprimiert wird. Durch diese konkrete Ausgestaltung wird der Aufnahmeraum besonders zuverlässig gegen die Atmosphäre abgedichtet.

Folglich ist die genannte Aufgabe gelöst.

Das Gehäuse und das Fifterelement können verschiedene geometrische Formen aufweisen, sofern sich das Gehäuse nur stärker verjüngt als das Filterelement.

Das Gehäuse könnte zumindest eine Nut zur Aufnahme eines Teils des Filterelements aufweisen. Vor diesem Hintergrund ist konkret denkbar, dass eine Falte des Filterelements in die Nut eingesetzt wird. Hierdurch ist einerseits eine Festlegung des Filterelements im Gehäuse und andererseits eine abdichtende Wirkung zwischen dem Gehäuse und einem Deckel ermöglicht. Das Gehäuse könnte einen Zu- oder Abströmstutzen zur Strömungsverbindung des Aufnahmeraums aufweisen. Durch einen Zu- oder Abströmstutzen kann ungefilterte oder gefilterte Luft geleitet werden. An diesem können mittels Schlauchklemmen Leitungen befestigt werden.

Der Deckel könnte einen Zu- oder Abströmstutzen zur Strömungsverbindung des Aufnahmeraums aufweisen. Durch den Zu- oder Abströmstutzen könnte gefilterte oder ungefilterte Luft geleitet werden. An diesem können mittels Schlauchklemmen Leitungen befestigt werden.

Das Filterelement könnte eine rechteckförmige, gefaltete Lage umfassen. Vor diesem Hintergrund ist konkret denkbar, dass das Filterelement als Flachfilter ausgestaltet ist und einen rechteckförmigen Faltenbalg aufweist. Die Ausbildung von Falten erhöht die effektive Filterfläche. Denkbar ist auch, dass zumindest der Faltenbalg des Filterelements Aktivkohlepartikel aufweist. Durch diese konkrete Ausgestaltung können unangenehme Gerüche absorbiert werden.

Die Randbereiche könnten streifenförmig ausgebildet und an den Längsseiten der Lage angeordnet sein. Durch diese konkrete Ausgestaltung wird vermieden, dass sich zwischen dem Faltenbalg des Filterelements und der Innenwandung des Gehäuses Spalten oder Ritzen ausbilden.

Vor diesem Hintergrund ist denkbar, dass die Lage und/oder die Randbereiche aus Vliesstoff gefertigt sind. Vliesstoff eignet sich in besonderem Maße für die

Herstellung von Filterelementen, da dessen Porosität problemlos einstellbar ist. Des Weiteren lassen sich Vliesstoffe im Rahmen einer einfachen Fertigung thermisch problemlos miteinander verbinden.

Der Vliesstoff könnte auf zumindest 20% seiner Dicke im unbelasteten Zustand komprimierbar sein. Durch diese konkrete Ausgestaltung könnten die Randbereiche ein äußerst elastisches Anlageelement zwischen der Innenwandung des Gehäuses und der gefalteten Lage ausbilden. Die Komprimierbarkeit auf zumindest 20% seiner Dicke im unbelasteten Zustand erlaubt eine besonders dichte Anlage des Filterelements in den sich verjüngenden Bereichen des Gehäuses.

Die Randbereiche könnten eine Höhe von 5 bis 70 mm und eine Breite von 2 bis 4 mm aufweisen. Diese konkrete Ausgestaltung erlaubt eine zuverlässige und dichtende Aufnahme der Randbereiche in der Nut des Deckels. Die Randbereiche ragen derart weit in die Nut des Deckels hinein, dass die Randbereiche zumindest an ihrem Ende von der sich verjüngenden Nut zusammengedrückt werden können. Hierdurch wird ein besonderer Dichteffekt erzielt.

Die gefaltete Lage könnte zumindest eine Endfalte aufweisen, die mit einer Nut des Gehäuses in Eingriff steht. Durch diese konkrete Ausgestaltung wird einerseits ein Dichteffekt und andererseits eine sichere Positionierung des Filterelements im Gehäuse erzielt.

Ein Filterelement könnte eine flächige Lage mit Endfalten und Randbereichen umfassen, wobei die Randbereiche Überstände aufweisen, welche die Faltenspitzen der flächigen Lage überragen. Ein solches Filterelement ist besonders zur Positionierung in einer hier beschriebenen Filteranordnung geeignet. Die Überstände der Randbereiche, welche die Faltenspitzen der flächigen Lage überragen, können vorteilhaft in Nuten eines Deckels oder des Gehäuses aufgenommen werden und das Filterelement einerseits festlegen und andererseits eine hohe Dichtwirkung erzielen.

Die hier beschriebene Filteranordnung eignet sich besonders zur Verwendung im Luftansaugsystem von Kraftfahrzeugen, da die Motorzuluft besonders zuverlässig gefiltert wird. Die zuverlässige Filterung von Luft eignet die hier beschriebene Filteranordnung auch zur Verwendung in einer Klimaanlage eines Kraftfahrzeugs.

Es gibt nun verschiedene Möglichkeiten, die Lehre der vorliegenden Erfindung auf vorteilhafte Weise auszugestalten und weiterzubilden. Dazu ist einerseits auf die nachgeordneten Patentansprüche und andererseits auf die nachfolgende Erläuterung eines bevorzugten Ausführungsbeispiels der Erfindung an Hand der Zeichnung zu verweisen.

In Verbindung mit der Erläuterung des bevorzugten Ausführungsbeispiels der Erfindung an Hand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine perspektivische Ansicht des Gehäuses,
- Fig. 1a: einen Ausschnitt eines Eckbereichs des Gehäuses,
- Fig. 2: eine Ansicht des Filterelements,
- Fig. 3: eine perspektivische Ansicht des Deckels, und
- Fig. 4: eine teilweise Schnittansicht des Deckels.

Ausführung der Erfindung

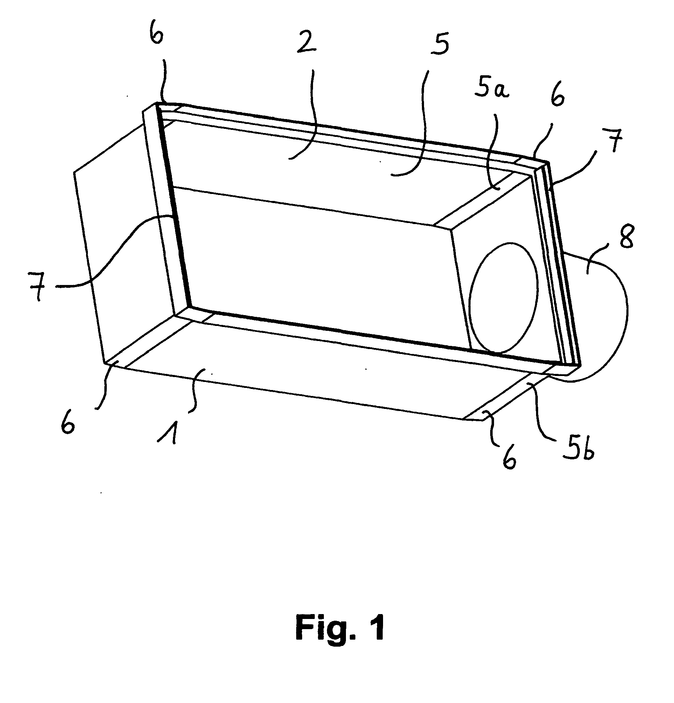

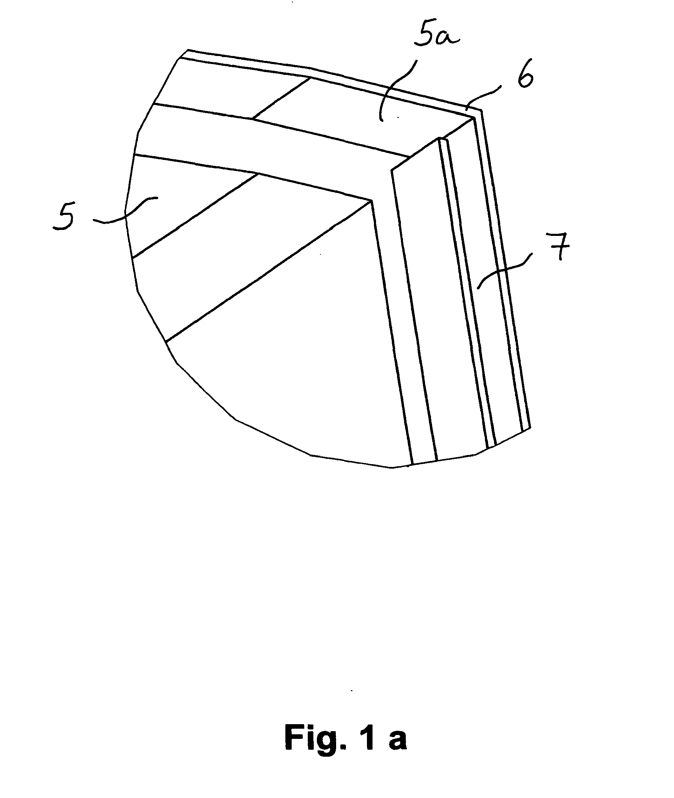

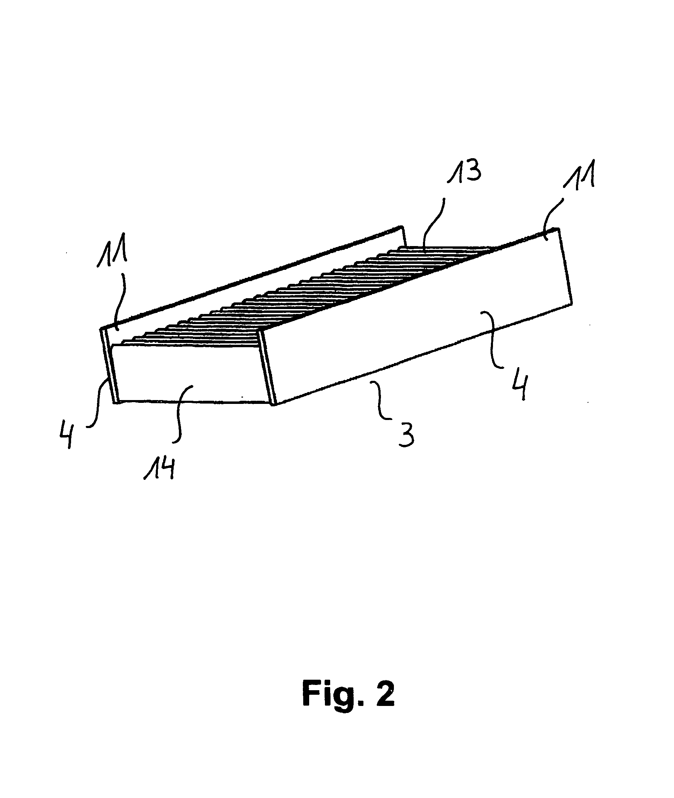

Fig. 1 zeigt ein Gehäuse 1, welches in einem Aufnahmeraum 2 ein in Fig. 2 gezeigtes Filterelement 3 aufnehmen kann. Das Gehäuse 1 weist eine Innenwandung 5 auf, an der die Randbereiche 4 des in Fig. 2 gezeigten Filterelements 3 anliegen. Das Gehäuse 1 ist derart ausgeformt, dass sich der Aufnahmeraum 2 zumindest bereichsweise in zumindest einer Raumrichtung, nämlich in Richtung seiner Eckbereiche 6 verjüngt. Dabei ist der Aufnahmeraum 2 im Querschnitt rechteckförmig ausgebildet.
Der Aufnahmeraum 2 verjüngt sich in Richtung der Eckbereiche 6 derart, dass der Abstand zwischen zwei sich gegenüberliegenden Flächen 5a, 5b der Innenwandung 5 abnimmt. Dabei kann der Abstand zwischen den sich gegenüberliegenden Flächen 5a, 5b kontinuierlich oder diskontinuierlich abnehmen. In Fig. 1 a ist ein Eckbereich 6 des Gehäuses 1 gezeigt.

Das Gehäuse 1 weist zumindest eine Nut 7 zur Aufnahme eines Teils 14 auf, nämlich der Endfalte einer gefalteten Lage 13 des Filterelements 3 gemäß Fig. 2. Das Gehäuse 1 weist einen Zu- oder Abströmstutzen 8 zur Strömungsverbindung des Aufnahmeraums 2 auf.

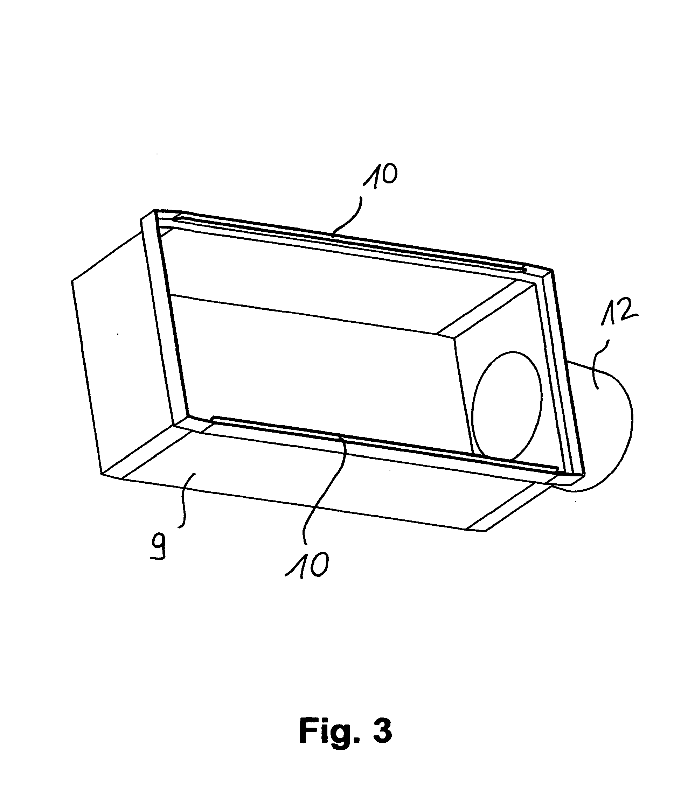

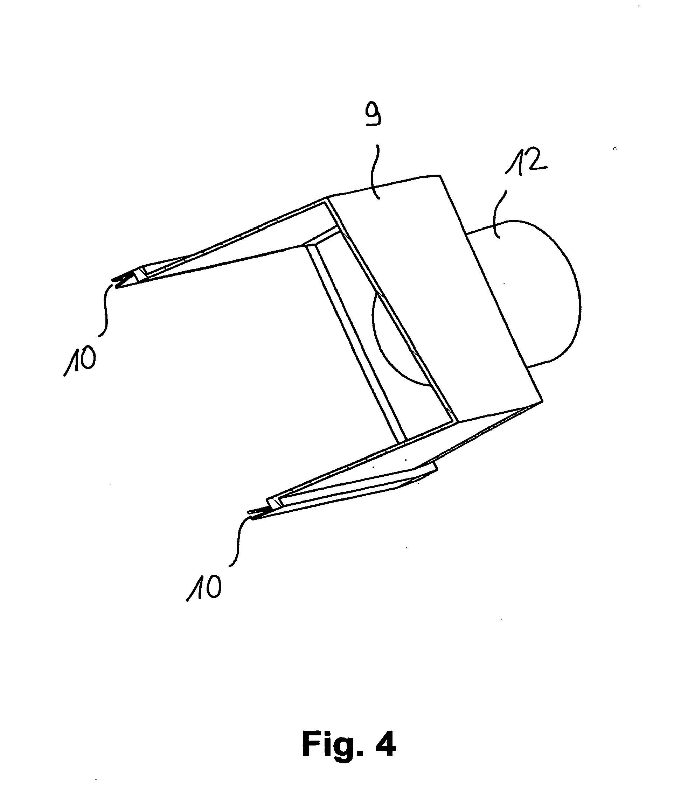

Das Gehäuse 1 ist durch einen Deckel 9 gemäß Fig. 3 verschließbar. Der Deckel 9 weist zumindest eine Nut 10 zur Aufnahme eines Überstands 11 des Randbereichs 4 des Filterelements 3 gemäß Fig. 2 auf. Die Nut 10 verjüngt sich derart, dass der Überstand 11 beim Zusammenfügen des Gehäuses 1 und des Deckels 9 komprimiert wird. Die Verjüngung der Nut 10 ist in Fig. 4 in einer teilweisen Schnittansicht des Deckels 9 gezeigt. Der Deckel 9 weist einen Zuoder Abströmstutzen 12 zur Strömungsverbindung des Aufnahmeraums 2 auf.

Fig. 2 zeigt ein rechteckiges Filterelement 3, welches im Aufnahmeraum 2 aufgenommen wird. Das Filterelement 3 weist eine rechteckförmige, gefaltete Lage 13 in Form eines Faltenbalgs auf. An den Längsseiten der gefalteten Lage 13 sind streifenförmige Randbereiche 4 aus Vliesstoff angeordnet. Diese können mit der gefalteten Lage 3 verklebt oder verschweißt sein. Die Lage 13 ist ebenfalls aus Vliesstoff gefertigt.

Zumindest der Vliesstoff, aus dem die streifenförmigen Randbereiche 4 gefertigt sind, ist auf zumindest 20% seiner Dicke im unbelasteten Zustand komprimierbar.

Die Randbereiche 4 weisen eine Höhe von 10 mm und eine Breite von 3 mm auf. Die Randbereiche 4 weisen Überstände 11 auf, welche die Faltenspitzen der flächigen Lage 13 überragen. Diese Überstände 11 können in der Nut 10 des Deckels 9 aufgenommen werden.

Die gefaltete Lage 13 weist zumindest eine Endfalte 14 auf, die mit der Nut 7 des Gehäuses 1 in Eingriff stehen kann.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ausdrücklich hervorgehoben, dass das zuvor rein willkürlich gewählte Ausführungsbeispiel lediglich zur Erörterung der erfindungsgemäßen Lehre dient, diese jedoch nicht auf dieses Ausführungsbeispiel einschränkt.

## Patentansprüche

1. Filteranordnung zum Filtern eines fluiden oder gasförmigen Mediums, umfassend **ein Filterelement (3), einen Deckel (9)** und ein Gehäuse (1), welches in einem Aufnahmeraum (2) ein Filterelement (3) aufnimmt, wobei das Fliterelement (3) einen Randbereich (4) aufweist, der zumindest bereichsweise an der Innenwandung (5) des Gehäuses (1) anliegt, **wobei** das Gehäuse (1) derart ausgeformt Ist, dass sich der Aufnahmeraum (2) zumindest bereichsweise in zumindest einer Raumrichtung verjüngt, **wobei das Gehäuse (1) durch den Deckel (9) verschließbar ist und wobei der Deckel (9) zumindest eine Nut (10) zur Aufnahme eines Überstands (11) des Randbereichs (4) des Filterelements (3) aufweist,**
**dadurch gekennzeichnet, dass**
**die Nut (10) sich derart verjüngt, dass der Überstand (11) beim Zusammenfügen des Gehäuses (1) und des Deckels (9) komprimiert wird, wobei der Aufnahmeraum (2) Eckbereiche (6) aufweist und sich in Richtung der Eckbereiche (6) derart verjüngt, dass der Abstand zwischen zwei sich gegenüberliegenden Flächen (5a, 5b) der Innenwandung (5) abnimmt**

2. Filteranordnung nach Anspruch 1, **dadurch gekennzeichnet, dass** das Gehäuse (1) zumindest eine Nut (7) zur Aufnahme eines Teils (14) des Filterelements (3) aufweist

3. Filteranordnung nach **Anspruch 1 oder 2, dadurch gekennzeichnet, dass** das Gehäuse (1) einen Zu- oder Abströmstutzen (8) zur Strömungsverbindung des Aufnahmeraums (2) aufweist.

4. Filteranordnung nach einem der Ansprüche **1 bis 3, dadurch gekennzeichnet, dass** der Deckel (9) einen Zu- oder Abströmstutzen (12) zur Strömungsverbindung des Aufnahmeraums (2) aufweist.

5. Filteranordnung nach einem der Ansprüche 1 bis **4, dadurch gekennzeichnet, dass** das Filterelement (3) eine rechteckförmige, gefaltete Lage (13) umfasst

6. Filteranordnung nach Anspruch **5, dadurch gekennzeichnet, dass** die Randbereiche (4) streifenförmig ausgebildet und an den Längsseiten der Lage (13) angeordnet sind.

7. Filteranordnung nach Anspruch 5 oder 6, **dadurch gekennzeichnet, dass** die Lage (13) und/ oder die Randbereiche (4) aus Vliesstoff gefertigt sind.

8. Filteranordnung nach Anspruch **7, dadurch gekennzeichnet, dass** der Vliesstoff auf zumindest 20% seiner Dicke im unbelasteten Zustand komprimierbar ist.

9. Filteranordnung nach Anspruch **7** oder **8, dadurch gekennzeichnet, dass** die Randbereiche (4) eine Höhe von 5 bis 70 mm und eine Breite von 2 bis 4 mm aufweisen.

10. Filteranordnung nach einem der Ansprüche **5** bis **9, dadurch gekennzeichnet, dass** die gefaltete Lage (13) zumindest eine Endfalte (14) aufweist, die mit der Nut (7) des Gehäuses (1) in Eingriff steht.

## Claims

1. Filter arrangement for filtering a fluid or gaseous medium, comprising a filter element (3), a cover (9) and a housing (1) which receives a filter element (3) in a reception space (2), the filter element (3) having a marginal region (4) which bears at least in regions against the inner wall (5) of the housing (1), the housing (1) being shaped in such a way that the reception space (2) tapers at least in regions in at least one direction of space, the housing (1) being closable by means of the cover (9), and the cover (9) having at least one groove (10) for receiving an overhang (11) of the marginal region (4) of the filter element (3), **characterized in that** the groove (10) tapers in such a way that the overhang (11) is compressed when the housing (1) and the cover (9) are joined together, the reception space (2) having corner regions (6) and tapering in the direction of the corner regions (6) in such a way that the distance between two mutually opposite faces (5a, 5b) of the inner wall (5) decreases.

2. Filter arrangement according to Claim 1, **characterized in that** the housing (1) has at least one groove (7) for receiving part (14) of the filter element (3).

3. Filter arrangement according to Claim 1 or 2, **characterized in that** the housing (1) has an inflow or outflow connection piece (8) for the flow connection of the reception space (2).

4. Filter arrangement according to one of Claims 1 to 3, **characterized in that** the cover (9) has an inflow or outflow connection piece (12) for the flow connection of the reception space (2).

5. Filter arrangement according to one of Claims 1 to 4, **characterized in that** the filter element (3) comprises a rectangular folded ply (13).

6. Filter arrangement according to Claim 5, **characterized in that** the marginal regions (4) are of strip-shaped form and are arranged on the longitudinal sides of the ply (13).

7. Filter arrangement according to Claim 5 or 6, **characterized in that** the ply (13) and/or the marginal regions (4) are manufactured from non-woven material.

8. Filter arrangement according to Claim 7, **characterized in that** the non-woven material is compressible to at least 20% of its thickness in a nonloaded state.

9. Filter arrangement according to Claim 7 or 8, **characterized in that** the marginal regions (4) have a height of 5 to 70 mm and a width of 2 to 4 mm.

10. Filter arrangement according to one of Claims 5 to 9, **characterized in that** the folded ply (13) has at least one end fold (14) which is in engagement with the groove (7) of the housing (1).

## Revendications

1. Ensemble de filtre pour filtrer un milieu fluide ou gazeux, comportant un élément de filtre (3), un couvercle (9) et un boîtier (1) qui reçoit un élément de filtre (3) dans un espace de réception (2), l'élément de filtre (3) comprenant une zone de bord (4) qui s'applique au moins dans certaines zones contre la paroi intérieure (5) du boîtier (1), le boîtier (1) étant formé de telle sorte que l'espace de réception (2) s'amincisse au moins dans certaines zones dans au moins une direction dans l'espace, le boîtier (1) pouvant être fermé par le couvercle (9), et le couvercle (9) comprenant au moins une rainure (10) pour la réception d'une saillie (11) de la zone de bord (4) de l'élément de filtre (3),
**caractérisé en ce que**
la rainure (10) s'amincit de telle sorte que la saillie (11) soit comprimée lors de l'assemblage du boîtier (1) et du couvercle (9), l'espace de réception (2) comprenant des zones de coin (6) et s'amincissant dans la direction des zones de coin (6) de telle sorte que la distance entre deux surfaces opposées (5a, 5b) de la paroi intérieure (5) diminue.

2. Ensemble de filtre selon la revendication 1, **caractérisé en ce que** le boîtier (1) comprend au moins une rainure (7) pour la réception d'une partie (14) de l'élément de filtre (3).

3. Ensemble de filtre selon la revendication 1 ou 2, **caractérisé en ce que** le boîtier (1) comprend une tubulure d'afflux ou d'évacuation (8) pour la liaison d'écoulement de l'espace de réception (2).

4. Ensemble de filtre selon l'une quelconque des revendications 1 à 3, **caractérisé en ce que** le couvercle (9) comprend une tubulure d'afflux ou d'évacuation (12) pour la liaison d'écoulement de l'espace de réception (2).

5. Ensemble de filtre selon l'une quelconque des revendications 1 à 4, **caractérisé en ce que** l'élément de filtre (3) comporte une couche pliée rectangulaire (13).

6. Ensemble de filtre selon la revendication 5, **caractérisé en ce que** les zones de bord (4) sont réalisées en forme de bande et sont disposées au niveau des côtés longitudinaux de la couche (13).

7. Ensemble de filtre selon la revendication 5 ou 6, **caractérisé en ce que** la couche (13) et/ou les zones de bord (4) sont fabriquées en étoffe non tissée.

8. Ensemble de filtre selon la revendication 7, **caractérisé en ce que** l'étoffe non tissée peut être comprimée sur au moins 20% de son épaisseur dans l'état non chargé.

9. Ensemble de filtre selon la revendication 7 ou 8, **caractérisé en ce que** les zones de bord (4) présentent une hauteur de 5 à 70 mm et une largeur de 2 à 4 mm.

10. Ensemble de filtre selon l'une quelconque des revendications 5 à 9, **caractérisé en ce que** la couche pliée (13) comprend au moins un pli d'extrémité (14) qui est en prise avec la rainure (7) du boîtier (1).
